# FASCICULE DE BREVET EUROPEEN

(11) **EP 1 188 403 B1**
(45) Date de publication et mention de la délivrance du brevet: **13.08.2003**
(21) Numéro de dépôt: 01402355.0
(22) Date de dépôt: 13.09.2001
(51) Int. Cl.: A47J 37/12, A47J 36/38

(54) **Appareil de cuisson d'aliments comportant un dispositif amovible de condensation des vapeurs de cuisson**
Kochgerät für Nahrungsmittel mit einer abnehmbaren Vorrichtung zum Kondensieren von Kochdämpfen
Cooking appliance for foodstuffs comprising a removable device for condensing cooking vapours

(30) Priorité: 13.09.2000 FR 0011686
(43) Date de publication de la demande: 20.03.2002
(73) Titulaire: SEB S.A., 69130 Ecully (FR)
(72) Inventeur: Bois, Bernard, 14000 Caen (FR); Bouffay, Alain, 14123 Cormelles Le Royal (FR)
(74) Mandataire: Kiehl, Hubert

(56) Documents cités:
- FR-A- 2 559 047
- FR-A- 2 703 894
- FR-A- 2 754 696

## Description

La présente invention se rapporte aux appareils de cuisson d'aliments, tels que par exemple des friteuses électriques à usage ménager, qui comportent, dans un boîtier, une cuve destinée à la cuisson d'aliments, un bac amovible logeant de manière amovible un dispositif de condensation des vapeurs de cuisson qui comprend au moins une entrée d'amenée des vapeurs à condenser, et des moyens de conduite communiquant avec la cuve et présentant au moins une ouverture terminale sur laquelle est destinée à venir se raccorder l'entrée du dispositif de condensation lors de la mise en place correcte du bac dans le boîtier. Un tel appareil (cf. préambule de la revendication 1) est connu de FR-A-2 754 696.

On sait que pour de tels appareils de cuisson, l'utilisation d'un dispositif de condensation est particulièrement efficace pour éliminer les vapeurs contenant les substances odorantes inopportunes émises au cours de la cuisson.

Dans un appareil de cuisson connu de ce genre, le dispositif de condensation, du type à échange de chaleur, comprend au moins une cassette réfrigérante hermétique qui est montée amovible dans le bac et qui possède un embout tubulaire faisant saillie de la cassette et constituant l'entrée d'amenée des vapeurs à condenser destinée à se raccorder de manière étanche sur l'ouverture terminale des moyens de conduite, ainsi qu'au moins une sortie débouchant de la cassette et par laquelle s'écoule l'eau de condensation produite par passage des vapeurs dans la cassette. Dans cet appareil de cuisson, le bac amovible logeant la cassette est réalisé sous la forme d'un tiroir qui vient s'insérer dans un compartiment ménagé dans un socle faisant partie intégrante du boîtier de l'appareil. Lors de l'utilisation d'un tel appareil, il existe toujours le risque que l'utilisateur oublie de monter le bac dans le boîtier, ou encore positionne incorrectement le bac contenant la cassette d'une manière telle que l'embout de la cassette ne soit pas raccordé sur l'ouverture terminale des moyens de conduite, puis déclenche l'opération de cuisson. Dès lors, au cours de la cuisson, les vapeurs s'échappent vers l'extérieur du boîtier via l'ouverture terminale des moyens de conduite, conduisant alors à un échauffement anormalement élevé du plan de travail sur lequel repose l'appareil, ainsi qu'à un risque de brûlures pour l'utilisateur. Egalement, il peut arriver que l'utilisateur positionne correctement le bac dans le boîtier sans que la cassette y ait été montée, puis déclenche l'opération de cuisson. Il s'ensuit que les vapeurs de cuisson passent dans le bac et s'échappent dans le boîtier au sein duquel elles se diffusent, risquant d'endommager les composants électriques et thermiques habituellement utilisés dans cet appareil de cuisson.

L'invention a notamment pour but de remédier à ces inconvénients et de réaliser un appareil de cuisson, du type exposé ci-dessus, qui présente une grande sécurité de fonctionnement à l'égard de tout risque lié à l'absence du bac dans le boîtier ou à la mise en place incorrecte du bac dans le boîtier, ou encore à l'absence du dispositif de condensation dans le bac.

Selon l'invention, l'appareil de cuisson comporte de plus des moyens mécaniques de sécurité qui sont associés à l'ouverture terminale des moyens de conduite et qui sont mobiles entre une position de sécurité dans laquelle ils obturent ladite ouverture des moyens de conduite et en laquelle ils sont amenés automatiquement lorsque le bac n'est pas présent ou incorrectement mis en place dans le boîtier ou lorsque le dispositif de condensation n'est pas présent dans le bac, et une position de travail pour laquelle ils sont déplacés par actionnement du dispositif de condensation lors de la mise en place correcte du bac dans le boîtier et dans laquelle ils découvrent ladite ouverture des moyens de conduite.

Ainsi, grâce à l'obturation automatique de l'ouverture terminale des moyens de conduite par les moyens mécaniques de sécurité, lorsque le bac est absent ou incorrectement mis en place dans le boîtier, ou encore lorsque le dispositif de condensation est absent, les vapeurs au cours de la cuisson circulent dans les moyens de conduite et s'échappent de l'appareil d'une manière identique à un appareil de cuisson classique, offrant ainsi une garantie optimale de sécurité à l'utilisateur.

Dans un mode de réalisation préféré, les moyens de conduite comportent au moins un conduit se terminant par l'ouverture sur laquelle est destinée à venir se raccorder l'entrée du dispositif de condensation, et les moyens mécaniques de sécurité comportent un volet qui est monté pivotant dans le conduit en étant agencé en regard de l'ouverture du conduit, ledit volet étant associé à des moyens de rappel élastique qui tendent à la rappeler en position de sécurité. Ce volet constitue avantageusement une pièce mécanique simple, fiable, peu coûteuse et parfaitement adaptée à une fabrication en grande série.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un appareil de cuisson électrique selon l'invention, comprenant un bac amovible logeant une cassette réfrigérante amovible et étant correctement en place dans l'appareil ;
- la figure 2 est une vue schématique en perspective, à échelle agrandie, du bac contenant la cassette réfrigérante ;
- la figure 3 est une vue similaire à la figure 1, en l'absence du bac ;
- la figure 4 est une vue schématique en perspective, à échelle agrandie, d'un volet de sécurité monté dans l'appareil des figures 1 et 3 ; et
- la figure 5 est une vue schématique partielle en coupe, à échelle agrandie, d'un embout de la cassette venant actionner le volet.

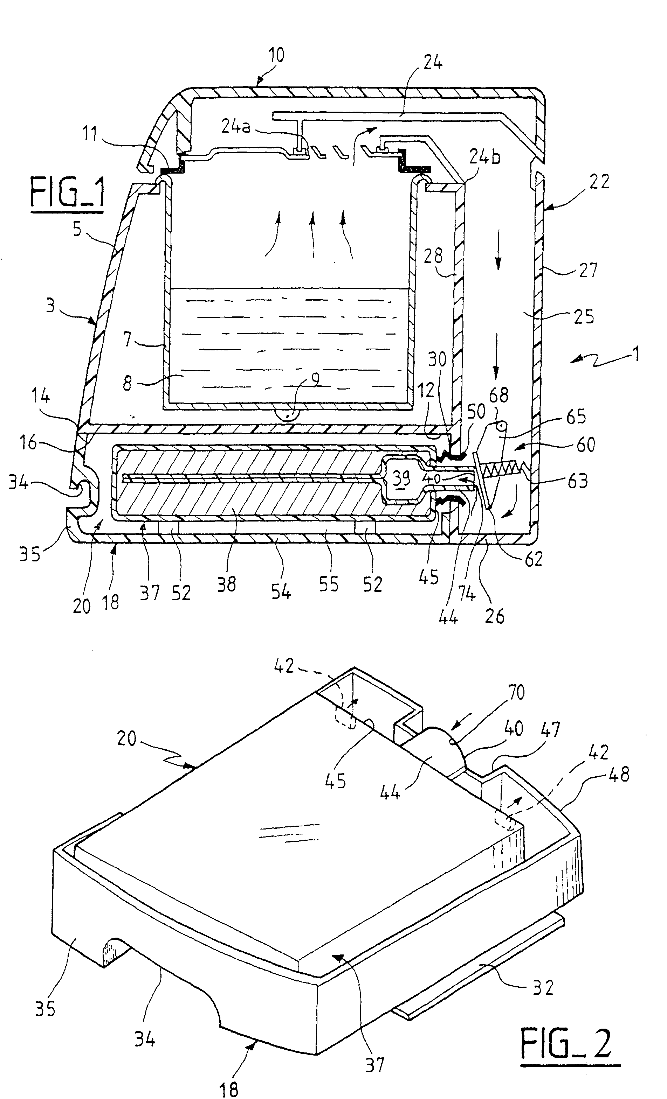

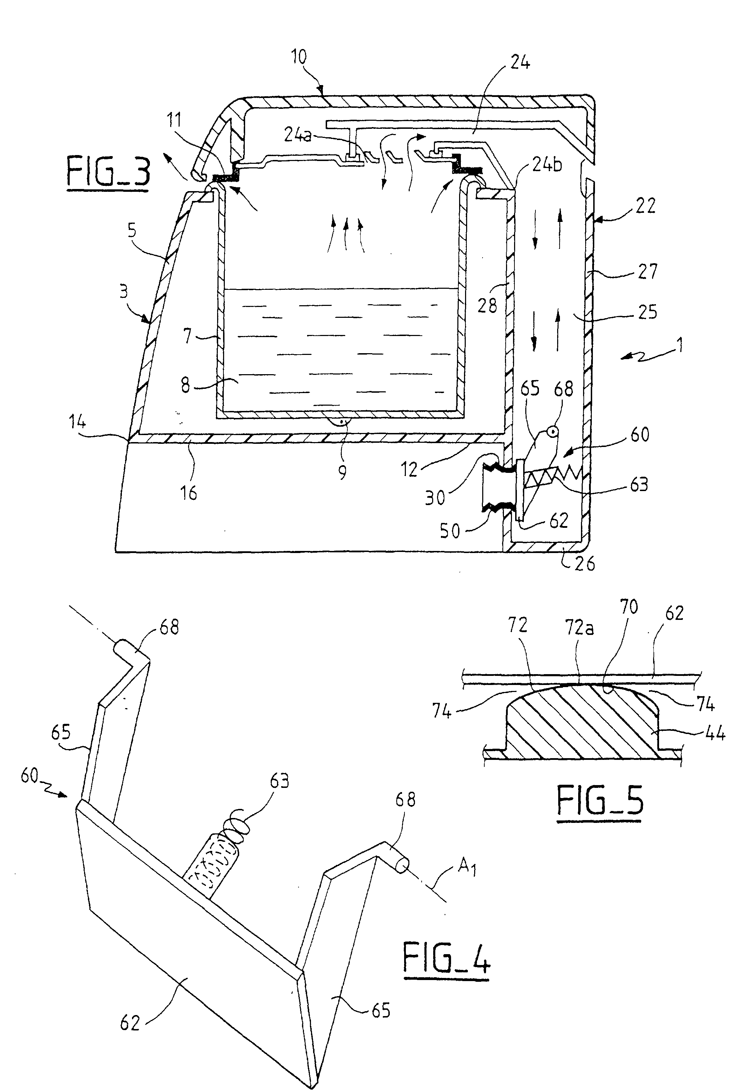

L'appareil de cuisson 1 représenté schématiquement aux figures 1 et 3 est une friteuse électrique destinée à la cuisson d'aliments par immersion dans un bain d'huile en particulier, et comportant un boîtier externe 3, par exemple de forme générale sensiblement parallélépipédique, formé d'un réceptacle ouvert 5 logeant une cuve métallique 7 fixe ou amovible, par exemple de forme rectangulaire, destinée à contenir un bain de friture 8 et en relation thermique avec des moyens de chauffage électrique, tels qu'une résistance blindée chauffante 9 disposée sous le fond de la cuve. Le réceptacle 5 est fermé pendant la friture au moyen d'un couvercle 10 monté articulé sur un bord supérieur du réceptacle 5. Le couvercle 10 comporte sur sa face interne un joint périphérique 11 conformé de manière à réaliser une certaine étanchéité entre la cuve 7 et le couvercle 10 lorsque ce dernier est fermé.

Le réceptacle 5 et le couvercle 10 sont moulés chacun en une matière plastique telle que, par exemple, le polypropylène qui est particulièrement économique et d'un entretien facile.

Dans l'exemple de réalisation illustré à la figure 1, un logement 12 est pratiqué à la base du boîtier 3 en s'ouvrant en face frontale 14 et en fond 16 du boîtier, et est destiné à recevoir un bac amovible 18 en matière plastique, mieux visible à la figure 2, propre à loger de manière amovible un dispositif de condensation de vapeur, désigné par la référence globale 20 sur les figures 1 et 2.

Le dispositif de condensation 20 est adapté, lorsque le bac 18 est correctement mis en place dans le logement 12 du boîtier 3, à venir se raccorder sur des moyens de conduite ou de liaison 22 communiquant avec la cuve 7 et permettant l'écoulement des vapeurs de cuisson depuis la cuve 7 jusqu'au dispositif de condensation 20.

Dans l'exemple de réalisation illustré à la figure 1, les moyens de conduite 22 comportent un premier conduit 24 intégré dans le couvercle 10, dont l'une des extrémités 24a débouche dans le volume supérieur de la cuve 7, et dont l'autre extrémité 24b débouche d'une manière étanche dans un second conduit vertical 25 fermé à son extrémité inférieure 26 et ménagé dans le boîtier 3, entre la paroi arrière 27 et une paroi intérieure 28 de celui-ci. Le conduit 25 comporte au moins une ouverture dite terminale 30, en l'occurrence une seule, qui est pratiquée dans la paroi intérieure 28 du boîtier 3, en dessous du fond 16 de celui-ci, et sur laquelle est destiné à venir se raccorder le dispositif de condensation 20 lors de la mise en place correcte du bac 18 dans le boîtier 3.

Dans cet exemple de réalisation, figures 1 et 2, le bac amovible 18 est conformé en un tiroir de forme parallélépipédique, ouvert en sa région supérieure, et monté coulissant horizontalement dans le logement 12 du boîtier 3 par deux ailes longitudinales 32, dont une seule est visible sur la figure 2, venant s'engager dans deux glissières correspondantes (non figurées) ménagées respectivement sur les deux parois latérales du logement 12. Sur les figures 1 et 2, on a représenté en 34 une large échancrure pratiquée dans la face antérieure 35 du bac 18 et formant un organe de préhension destiné au retrait du bac.

Dans cet exemple, figures 1 et 2, le dispositif amovible de condensation 20 comporte au moins une cassette réfrigérante hermétique 37, ici une seule, de forme parallélépipédique, qui est montée amovible dans le bac 18 en s'étendant à plat sensiblement sur toute la longueur du bac 18. La cassette 37 est, de préférence, réalisée en une matière plastique transparente, contient un agent réfrigérant 38 (figure 1) constitué présentement par de l'eau congelée, éventuellement colorée par un colorant non toxique, et loge un conduit interne 39, visible en partie sur la figure 1, faisant office de canal condenseur. Ce conduit 39 est conformé de manière à présenter au moins une entrée 40 d'amenée des vapeurs à condenser, en l'occurrence une seule, et au moins une sortie 42, en l'occurrence deux sorties disposées de part et d'autre de l'entrée 40 (voir figure 2), débouchant de la cassette et destinée à l'écoulement de l'eau de condensation produite par le passage des vapeurs dans le conduit 39 refroidi par la glace.

Comme le montre la figure 2, l'entrée 40 du conduit de la cassette 37 est constituée présentement par un embout tubulaire 44 qui fait axialement saillie de la face antérieure 45 de la cassette 37 en débouchant dans une échancrure 47 pratiquée dans la face postérieure 48 du bac 18, et qui est destiné à venir se raccorder directement et d'une manière étanche dans l'ouverture 30 du conduit 25 (voir figure 1) lors de la mise en place correcte du bac 18 dans le logement 12 du boîtier 3. Cette ouverture 30 du conduit 25 comporte à cet effet un joint tubulaire d'étanchéité 50 (figures 1 et 3) faisant légèrement saillie à l'intérieur du logement 12 du boîtier 3.

En regard de la figure 1, la cassette réfrigérante 37 repose sur des pions 52 surmontant la paroi de fond 54 du bac 18 de façon à créer une zone inférieure 55 destinée à collecter le condensat s'écoulant par les deux sorties 42 (figure 2) du conduit de la cassette 37.

Selon l'invention, la friteuse comporte de plus des moyens mécaniques de sécurité, désignés par la référence globale 60 sur les figures 1, 3 et 4, qui sont associés à l'ouverture 30 du conduit 25 et qui sont mobiles entre une position de travail (figure 1) pour laquelle ils sont déplacés par actionnement du dispositif de condensation 20 lors de la mise en place correcte du bac 18 dans le boîtier 3 et dans laquelle ils découvrent l'ouverture 30 du conduit 25, et une position de sécurité (figure 3) dans laquelle ils obturent l'ouverture 30 du conduit et en laquelle ils sont amenés automatiquement lorsque le bac 18 n'est pas présent ou incorrectement mis en place dans le boîtier ou lorsque le dispositif de condensation 20 n'est pas présent dans le bac 18.

Ainsi, grâce à ces moyens de sécurité, l'utilisateur peut utiliser la friteuse indifféremment avec ou sans dispositif de condensation, contrairement aux friteuses équipées d'un dispositif de condensation selon l'art antérieur qui, elles, ne pouvaient être utilisées qu'en présence du dispositif de condensation.

Dans un mode d'exécution préféré de l'invention, les moyens mécaniques de sécurité 60 comportent un volet 62 qui est monté pivotant dans le conduit 25, suivant une direction transversale à l'axe longitudinal de la cassette 37, en étant agencé en regard de l'ouverture 30 du conduit 25. Ce volet 62 est monté pivotant à l'encontre d'un ressort de rappel 63 qui est interposé fixement entre le volet 62 et la face interne de la paroi arrière 27 du boîtier 3, et qui est destiné à rappeler le volet en position de sécurité (figure 3).

Comme le montre la figure 4, le volet 62 présente une forme rectangulaire allongée et est bordé latéralement de deux ailes identiques 65 s'élevant vers le haut et munies respectivement de deux tourillons identiques 68 coaxialement alignés, d'axe fixe Al, et destinés à pivoter dans des logements ménagés dans deux faces latérales opposées du conduit 25. De préférence, le volet 62 ainsi que les deux ailes 65 et les deux tourillons 68 sont moulés d'une seule pièce en une matière plastique rigide.

Dans l'exemple de réalisation illustré à la figure 1, l'embout tubulaire 44 de la cassette 37 est adapté, par son extrémité libre 70, à actionner le volet 62 pour faire pivoter ce dernier vers sa position de travail (figure 1) lors de la mise en place correcte du bac 18 dans le boîtier 3.

En regard de la figure 5, l'extrémité libre 70 de l'embout 44 comporte un bord périphérique 72 qui s'étend dans un plan courbe en ayant une partie bombée proéminente 72a destinée à venir actionner par appui direct le volet 62 pour assurer le pivotement de ce dernier vers sa position de travail (figure 1). Cette partie bombée proéminente 72a du bord périphérique 72 de l'embout, en appui contre le volet 62 (figure 5), ménage avec le volet 62 deux espaces identiques 74 destinés chacun à l'introduction des vapeurs dans l'embout 44 de la cassette 37.

Ainsi, lorsque l'utilisateur met correctement en place le bac 18 contenant la cassette 37 à l'intérieur du boîtier 3, la partie bombée proéminente 72a de l'embout 44 de la cassette 37 actionne le volet 62, à l'encontre du ressort 63, qui pivote en sens anti-horaire pour venir occuper sa position de travail, illustrée à la figure 1, dans laquelle il découvre l'ouverture 30 sur laquelle se raccorde directement et de façon étanche l'embout tubulaire 44 de la cassette 37.

Dès lors, au cours de la friture (voir figure 1), les vapeurs de cuisson (symbolisées par les flèches) s'échappent par le conduit 24, s'écoulent vers le bas dans le conduit 25 et pénètrent, via chaque espace 74, dans l'embout tubulaire 44 constituant l'entrée du conduit 39 de la cassette 37. Elles circulent alors dans le conduit 39 de la cassette 37 et se condensent dans celui-ci qui est refroidi par l'eau congelée ; l'eau de condensation contenant les odorants inopportuns s'écoule par les deux sorties 42 (figure 2) du conduit 39 et tombe dans la zone collectrice 55 du bac 18.

En fin de friture, lorsque l'utilisateur retire le bac 18, le volet pivotant 62 est libéré et vient occuper, sous l'action du ressort de rappel 63, sa position de sécurité dans laquelle il est plaqué sur le joint 50 pour obturer ou masquer de manière étanche l'ouverture 30 du conduit 25, comme illustré à la figure 3.

Si maintenant l'utilisateur souhaite faire une nouvelle friture, mais oublie de mettre en place le bac 18 dans le boîtier 3 comme montré à la figure 3, ou encore positionne incorrectement le bac 18 contenant une nouvelle cassette 37 d'une manière telle que l'embout 44 n'actionne pas le volet 62, ou encore positionne correctement le bac 18 dans le boîtier sans y avoir placé de cassette, le volet 62 reste dans sa position de sécurité telle qu'illustrée à la figure 3 ; l'ouverture 30 du conduit 25 reste alors obturée de façon étanche par le volet 62.

Dès lors, au cours de cette nouvelle friture (voir figure 3), les vapeurs passent en partie dans le conduit 24, descendent puis remontent dans le conduit fermé 25, repassent ensuite dans le conduit 24 pour s'échapper vers l'extérieur de la friteuse par le joint périphérique 11 du couvercle 10 d'une manière identique à une friteuse classique.

## Revendications

1. Appareil de cuisson d'aliments comportant, dans un boîtier (3), une cuve (7) destinée à la cuisson d'aliments, un bac amovible (18) logeant de manière amovible un dispositif (20) de condensation des vapeurs de cuisson qui comprend au moins une entrée (40) d'amenée des vapeurs à condenser, et des moyens de conduite (22) communiquant avec la cuve et présentant au moins une ouverture terminale (30) sur laquelle est destinée à venir se raccorder l'entrée (40) du dispositif de condensation (20) lors de la mise en place correcte du bac (18) dans le boîtier (3), de manière à permettre l'écoulement des vapeurs de cuisson depuis la cuve (7) jusqu'au dispositif de condensation (20), **caractérisé en ce qu**'il comporte de plus des moyens mécaniques de sécurité (60) qui sont associés à l'ouverture terminale (30) des moyens de conduite (22) et qui sont mobiles entre une position de sécurité dans laquelle ils obturent ladite ouverture (30) des moyens de conduite (22) et en laquelle ils sont amenés automatiquement lorsque le bac (18) n'est pas présent ou incorrectement mis en place dans le boîtier (3) ou lorsque le dispositif de condensation (20) n'est pas présent dans le bac (18), et une position de travail pour laquelle ils sont déplacés par actionnement du dispositif de condensation (20) lors de la mise en place correcte du bac (18) dans le boîtier (3) et dans laquelle ils découvrent ladite ouverture (30) des moyens de conduite (22).

2. Appareil selon la revendication 1, dans lequel les moyens de conduite (22) comportent au moins un conduit (25) se terminant par l'ouverture (30) sur laquelle est destinée à venir se raccorder l'entrée (40) du dispositif de condensation (20), **caractérisé en ce que** les moyens mécaniques de sécurité (60) comportent un volet (62) qui est monté pivotant dans le conduit (25) en étant agencé en regard de l'ouverture (30) du conduit, ledit volet (62) étant associé à des moyens de rappel élastique (63) qui tendent à le rappeler en position de sécurité.

3. Appareil selon la revendication 2, **caractérisé en ce que** le volet (62) est muni de deux tourillons (68) coaxialement alignés et respectivement disposés de part et d'autre du volet (62), ces deux tourillons (68) étant montés pivotants respectivement dans deux faces latérales opposées du conduit (25).

4. Appareil selon la revendication 2 ou 3, dans lequel le dispositif de condensation (20) comprend au moins une cassette réfrigérante hermétique (37) montée amovible dans le bac (18) et possédant un embout tubulaire (44) faisant saillie de la cassette et constituant l'entrée (40) d'amenée des vapeurs à condenser, et au moins une sortie (42) débouchant de la cassette et par laquelle s'écoule l'eau de condensation produite par passage des vapeurs dans ladite cassette, **caractérisé en ce que** l'embout tubulaire (44) de la cassette (37) présente une extrémité libre (70) propre à faire pivoter le volet (62) vers sa position de travail lors de la mise en place correcte du bac (18) dans le boîtier (3).

5. Appareil selon la revendication 4, **caractérisé en ce que** l'extrémité libre (70) de l'embout (44) comporte un bord périphérique (72) s'étendant dans un plan courbe et présentant une partie bombée proéminente (72a) venant en appui contre le volet (62) de manière à faire pivoter celui-ci vers sa position de travail, ladite partie bombée proéminente (72a) du bord périphérique (72) ménageant avec le volet (62) en position de travail deux espaces (74) permettant l'introduction des vapeurs dans l'embout (44) de la cassette (37).

6. Appareil selon l'une quelconque des revendications précédentes, **caractérisé en ce qu'**il est constitué par une friteuse.

## Patentansprüche

1. Vorrichtung zum Kochen von Nahrungsmitteln, mit, in einem Gehäuse (3), einer Wanne (7), die zum Kochen von Nahrungsmitteln bestimmt ist, einem abnehmbaren Kasten (18), der auf abnehmbare Weise eine Einrichtung (20) zur Kondensation der Kochdämpfe aufnimmt, die wenigstens einen Eingang (40) zum Zuführen der zu kondensierenden Dämpfe aufweist, und Leitungsmittteln (22), die mit der Wanne in Verbindung stehen und wenigstens eine Endöffnung (30) aufweisen, an die der Eingang (40) der Kondensationseinrichtung (20) beim korrekten Einsetzen des Kastens (18) in das Gehäuse (3) angeschlossen werden soll, um das Strömen der Kochdämpfe aus der Wanne (7) bis zur Kondensationseinrichtung (20) zu ermöglichen, **dadurch gekennzeichnet, daß** sie ferner mechanische Sicherheitsmittel (60) aufweist, die der Endöffnung (30) der Leitungsmittel (22) zugeordnet und zwischen einer Sicherheitsposition, in welcher sie die Öffnung (30) der Leitungsmittel (22) verschließen und in welche sie automatisch gebracht werden, wenn der Kasten (18) nicht anwesend oder unkorrekt in das Gehäuse (3) eingesetzt ist oder wenn die Kondensationseinrichtung (20) nicht in dem Kasten (18) vorhanden ist, und einer Arbeitsposition beweglich sind, für welche sie durch Betätigung der Kondensationseinrichtung (20) beim korrekten Einsetzen des Kastens (18) in das Gehäuse (3) verschoben werden, und in welcher sie die Öffnung (30) der Leitungsmittel (22) freimachen.

2. Vorrichtung nach Anspruch 1, bei welcher die Leitungsmittel (22) wenigstens einen Kanal (25) aufweisen, der mit der Öffnung (30) endet, an die der Eingang (40) der Kondensationseinrichtung (20) angeschlossen werden soll, **dadurch gekennzeichnet, daß** die mechanischen Sicherheitsmittel (60) eine Klappe (62) aufweisen, die in der Leitung (25) schwenkbar angebracht ist, wobei sie gegenüber der Öffnung (30) der Leitung angeordnet ist, wobei die Klappe (62) elastischen Rückstellmitteln (63) zugeordnet ist, die sie tendenziell in die Sicherheitsposition zurückstellen.

3. Vorrichtung nach Anspruch 2, **dadurch gekennzeichnet, daß** die Klappe (62) mit zwei Zapfen (68) versehen ist, die koaxial ausgerichtet und beiderseits der Klappe (62) angeordnet sind, wobei diese zwei Zapfen (68) in zwei gegenüberliegenden Seitenflächen des Kanals (25) schwenkbar angebracht sind.

4. Vorrichtung nach Anspruch 2 oder 3, bei welcher die Kondensationseinrichtung (20) wenigstens eine hermetische Kühlkassette (37) aufweist, die in dem Kasten (18) abnehmbar angebracht ist und einen rohrförmigen Ansatz (44), der von der Kassette vorsteht und den Zuführungseingang (40) für die zu kondensierenden Dämpfe bildet, und wenigstens einen Ausgang (42) besitzt, der aus der Kassette mündet und durch den das durch den Durchgang der Dämpfe in der Kassette erzeugte Kondensationswasser abläuft, **dadurch gekennzeichnet, daß** der rohrförmige Ansatz (44) der Kassette (37) ein freies Ende (70) aufweist, das dazu geeignet ist, die Klappe (62) beim korrekten Einsetzen des Kastens (18) in das Gehäuse (3) in ihre Arbeitsposition zu verschwenken.

5. Vorrichtung nach Anspruch 4, **dadurch gekennzeichnet, daß** das freie Ende (70) des Ansatzes (44) einen Umfangsrand (72) aufweist, der sich in einer gekrümmten Ebene erstreckt und einen vorspringenden gewölbten Teil (72a) aufweist, der derart in Anlage gegen die Klappe (62) gelangt, daß diese in ihre Arbeitsposition verschwenkt wird, wobei der vorspringende gewölbte Teil (72a) des Umfangsrands (72) mit der Klappe (62) in der Arbeitsposition zwei Räume (74) vorsieht, die das Einbringen der Dämpfe in den Ansatz (44) der Kassette (37) ermöglichen.

6. Vorrichtung nach einem der vorhergehenden Ansprüche, **dadurch gekennzeichnet, daß** sie eine Fritteuse ist.

## Claims

1. A cooking appliance for cooking food, the appliance comprising, in a casing (3): a vessel (7) designed for cooking food, a removable container (18) removably housing a device (20) for condensing cooking vapor, which device includes at least one inlet (40) for feeding with vapor to be condensed; and duct means (22) communicating with the vessel and presenting at least one end opening (30) with which the inlet (40) of the condensing device (20) is designed to be connected when the container (18) is properly in place in the casing (3), so as to enable cooking vapor to flow from the vessel (7) to the condensing device (20), the appliance being **characterized in that** it further comprises mechanical safety means (60) which are associated with the end opening (30) of the duct means (22) and which are movable between a safety position in which they close said opening (30) of the duct means (22), and into which they are brought automatically when the container (18) is not present in the casing (3), or is incorrectly in place, or when the condensing device (20) is not present in the container (18), and a working position into which they are displaced by actuation from the condensing device (20) while the container (18) is being put into place properly in the casing (3), and in which they uncover said opening (30) of the duct means (22).

2. An appliance according to claim 1, in which the duct means (22) comprise at least one duct (25) that is terminated by the opening (30) with which the inlet (40) of the condensing device (20) is designed to be connected, the appliance being **characterized in that** the mechanical safety means (60) comprise a flap (62) which is pivotally mounted in the duct (25), and being arranged facing the opening (30) of the duct, said flap (62) being associated with resilient return means (63) which tend to return it into the safety position.

3. An appliance according to claim 2, **characterized in that** the flap (62) is provided with two pins (68) that are in axial alignment and are disposed on respective sides of the flap (62), the two pins (68) being pivotally mounted in two respective opposite side faces of the duct (25).

4. An appliance according to claim 2 or claim 3, in which the condensing device (20) comprises at least one sealed cooling cartridge (37) removably mounted in the container (18) and possessing a tubular ferrule (44) projecting from the cartridge and constituting the inlet (40) for feeding the vapor to be condensed, and at least one outlet (42) opening out from the cartridge, and through which condensation produced by vapor passing through the cartridge flows, the appliance being **characterized in that** the tubular ferrule (44) of the cartridge (37) presents a free end (70) suitable for pivoting the flap (62) into its working position while the container (18) is being put into place properly in the casing (3).

5. An appliance according to claim 4, **characterized in that** the free end (70) of the ferrule (44) includes a peripheral edge (72) extending in a curved plane and presenting a projecting convex portion (72a) that bears against the flap (62) in such a manner as to pivot said flap into its working position, said projecting convex portion (72a) of the peripheral edge (72) forming, with the flap (62) in the working position, two gaps (74) enabling vapor to enter into the ferrule (44) of the cartridge (37).

6. An appliance according to any preceding claim, **characterized in that** it is constituted by a fryer.
